**Europäisches Patentamt**

**European Patent Office**

**Office européen des brevets**

(19)

(11) Veröffentlichungsnummer: **0 110 335**
**B1**

(12) # EUROPÄISCHE PATENTSCHRIFT

(45) Veröffentlichungstag der Patentschrift:
15.10.86

(51) Int. Cl.⁴: **F 16 K 11/06**, F 16 K 27/04

(21) Anmeldenummer: **83111795.7**

(22) Anmeldetag: **25.11.83**

(54) Mischventil.

(30) Priorität: **29.11.82 DE 3244101**

(43) Veröffentlichungstag der Anmeldung:
**13.06.84 Patentblatt 84/24**

(45) Bekanntmachung des Hinweises auf die Patenterteilung:
**15.10.86 Patentblatt 86/42**

(84) Benannte Vertragsstaaten:
**AT BE CH DE FR GB IT LI NL SE**

(56) Entgegenhaltungen:
**WO-A-79/00134**
**DE-A-2 658 022**
**DE-A-2 658 023**
**DE-A-2 753 264**
**GB-A-2 078 910**
**US-A-3 788 354**

(73) Patentinhaber: **FRIEDRICH GROHE ARMATURENFABRIK GmbH & CO, Hauptstrasse 137, D-5870 Hemer 1 (DE)**

(72) Erfinder: **Humpert, Jürgen, Oberlinweg 18, D-5870 Hemer (DE)**
Erfinder: **Herring, William Peter, Unter dem Asenberg 30, D-5870 Hemer (DE)**

## Beschreibung

Die Erfindung betrifft ein Mischventil mit den im Oberbegriff des Anspruchs 1 angegebenen Merkmalen.

Ein Mischventil dieser Gattung ist in der DE-A-26 58 023 beschrieben. Bei diesem Mischventil sind die Ventilscheiben unter Vorspannung in eine Buchse eingebettet, so daß relativ hohe Ventilbetätigungskräfte auftreten. Außerdem bewirkt der anstehende Wasserdruck im Bereich der Ventilscheiben, daß die Buchse radial auseinander gedrückt wird und somit ein zugfestes Material für die Buchse erforderlich ist.

Bei einem anderen Ventil (DE-A-27 53 264) ist es ferner bekannt, die Verbindung der Zuflüsse zur Ventilsitzscheibe mit Dichtringen herzustellen, die jeweils in Strömungsrichtung eine trichterartig verjüngte Wasserführung aufweisen, so daß die Ventilsitzscheibe verstärkt durch den Wasserdruck auf die bewegliche Scheibe gedrückt wird.

Der Erfindung liegt die Aufgabe zugrunde, ein besonders leichtgängiges und verschleißarmes Ventilorgan für ein Mischventil der eingange angegebenen Gattung zu schaffen, bei dem außerdem das Ventilorgangehäuse aus nur gering zugfestem Kunststoffmaterial hergestellt werden kann.

Diese Aufgabe wird erfindungsgemäß durch die im kennzeichnenden Teil des Anspruchs 1 angegebenen Merkmale gelöst. Eine weitere bevorzugte Ausgestaltung der Erfindung ist in dem Anspruch 2 angegeben.

Die durch die Erfindung erreichten Vorteile sind im wesentlichen darin zu sehen, daß durch die Ausbildung von Wasseraufschlagflächen die Anpressung der Ventilscheiben sich automatisch den herrschenden Druckverhältnissen im an- und abströmenden Wasser anpaßt und somit eine optimale Leichtgängigkeit des Ventils gewährleistet werden kann. Durch die unmittelbare Verbindung der Zu- und Ablaufkanäle in dem Ventilgehäuse mit der unbeweglich in dem Ventilorgangehäuse bzw. in der Buchse gehalterten Scheibe ist außerdem sichergestellt, daß das Ventilorgangehäuse bzw. die Buchse keinen Zugspannungen ausgesetzt ist, sondern lediglich mit ihrem Rücken gegen die Wandung des Ventilgehäuses gepreßt wird, so daß Zugepannungen, die insbesondere von Kunststoffmaterialien nur schwer aufgenommen werden können, nicht auftreten. Außerdem wird mit den erfindungegemäßen Maßnahmen erreicht, daß die Buchse bzw. das Ventilorgangehäuse mit dem zufließenden und abfließenden Wasser nicht in Berührung kommt und lediglich die Funktion der Führung und Halterung der Ventilscheiben und des Stellglieds zu erfüllen braucht.

Aus Ausführungsbeispiel der Erfindung ist in der Zeichnung dargestellt und wird im folgenden näher beschrieben. Es zeigt

Figur 1 einen Teil eines Mischventils im Längsschnitt;

Figur 2 einen Schnitt in der Ebene des Mischventils gemäß Figur 1.

In einem Mischventil für den Sanitärbereich ist in einem zum Teil dargestellten Ventilgehäuse 1 in einer Aufnahmebohrung 13 ein etwa zylindrisch ausgebildetes Ventilorgangehäuse bzw. Buchse 2 angeordnet. In der Buchse 2 sind parallel zur Mittelachse 21 Scheiben 3, 4 angeordnet, wobei die Scheibe 3 unbeweglich und die Scheibe 4 mittels eines Stellgliedes 41 beweglich in der Buchse 2 angeordnet ist.

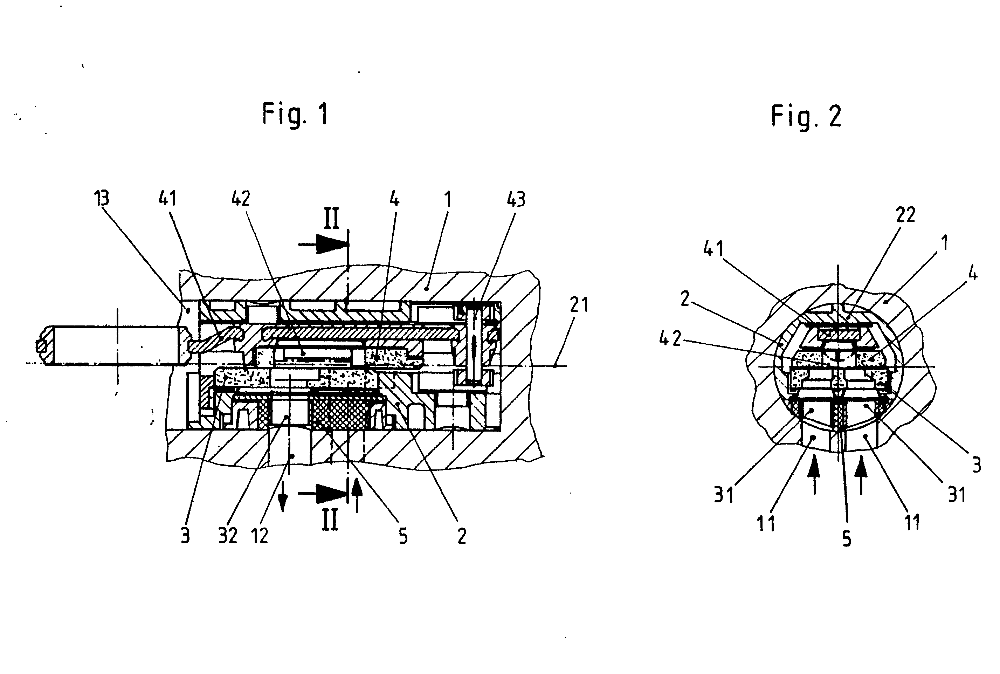

In der einen Hälfte der Mantelfläche der Buchse 2 ist ein radial einschiebbarer Dichtkörper S angeordnet, der einerseits die dichte Verbindung zu den Zulauf- und Ablaufkanälen 11,12 für kaltes, warmes und Mischwasser in dem Ventilgehäuse 1 und den entsprechenden Einlaß- und Auslaßöffnungen 31, 32 der unbeweglichen Scheibe 3 herstellt. Der Dichtkörper 5 sowie die beiden Scheiben 3 und 4 sind derart ausgebildet, daß der Druck des anstehenden Wassers einerseits auf die Wandung der Bohrung 13 des Ventilgehäuses 1 und andererseits auf entsprechend gestaffelte Aufschlagflächen der Scheiben 3 und 4 wirkt, so daß die beiden Scheiben gegen den Rücken 22 der Buchse 2, wie insbesondere Figur 2 zu entnehmen ist, gedrückt werden und darüber hinaus die beiden Scheiben die erforderliche Anpressung zur wasserdichten Anlage erhalten.

Dadurch, daß der Dichtkörper 5 radial in der Buchse 2 beweglich gehaltert ist, können einerseits keine Zugspannungen auf die Buchse einwirken und andererseits ist sichergestellt, daß sie keinerlei Berührung mit dem anund abströmenden Wasser erhält, was im Hinblick auf lebensmittelrechtliche Vorschriften von Bedeutung sein kann.

Die Funktionsweise des Mischventils ist folgende: Mit einem in der Zeichnung sicht dargestellten Griffteil kann das Stellglied 41 parallel zur Mittelachse 21 verschoben werden, wobei die beiden Einlaßöffnungen für Kalt- und Warmwasser synchron mit einem in der beweglich gehalterten Scheibe 4 ausgebildeten Misch- und Umlenkkanal 42 mehr oder weniger zur Deckung gebracht werden können und somit die Gesamtdurchflußmenge des Mischventils bestimmt werden kann. Durch ein Verschwenken des Stellgliedes 41 um eine Drehachse 43 können die Einlaßquerschnitte zwischen dem Einlaßöffnungen 31 und dem Mischund Umlenkkanal 42 gegensinnig verändert werden, wie insbesondere aus Figur 2 der Zeichnung zu entnehmen ist, und somit das Mischungsverhältnis von Kalt- und Warmwasser bzw. die Temperatur des Mischwassers bestimmt werden. Das in dem Misch- und Umlenkkanal 42 befindliche Mischwasser wird dann im eine Auslaßöffnung 32 der unbeweglichen Scheibe zurückgeführt und von hier über den Dichtkörper direkt in einen Auslaufkanal 12 des Ventilgehäuses 1 geführt.

## Patentansprüche

1. Mischventil, insbesondere Sanitärmischventil, mit einem Randgriff und zwei mit Durchtrittsöffnungen für Kalt-, Warm- und Mischwasser versehenen, in einer etwa zylindrisch ausgebildeten Buchse (2) parallel zur Mittelachse (21) der Buchse aufeinandergelagerten Scheiben (3, 4) zum Einstellen des Mischungsverhältnisses und der Ausflußmenge, wovon die eine Scheibe (3) unbeweglich, die andere Scheibe (4) zur ersten Scheibe (3) mit Hilfe eines Handgriffs verschiebbar ausgebildet ist, dadurch gekennzeichnet, daß ein Dichtkörper (5) radial und beweglich angeordnet ist in einer Längshälfte der Mantelfläche der Buchse (2), daß Öffnungen in dem Dichtkörper (5) die Ein- und Auslaßöffnungen (31, 32) der Buchse (2) bilden für den Anschluß von Kalt-, Warm- und Mischwasser, daß die beiden Scheiben (3, 4) mit in Durchströmungsrichtung gestaffelten Wasseraufschlagflächen versehen sind, so daß der Druck des an- und abströmenden Wassers die beiden Scheiben (3,4) radial in die Buchse (2) und aufeinander drückt.

2. Mischventil nach Anspruch 1, dadurch gekennzeichnet, daß der Dichtkörper (5) in der Buchse (2) radial geführt ist und unmittelbar die Zu- und Ablaufkanäle (11, 12) des Ventilgehäuses (1) mit den Öffnungen in der unbeweglichen Scheibe (3) dichtend verbindet, so daß die Buchse (2) mit dem zu- und abfließenden Wasser nicht in Berührung kommt.

## Claims

Mixing valve, especially a sanitary mixing valve, having a handle and two discs (3, 4) for adjusting the mixing ratio and the flow rate, which discs are mounted one on top of the other in an approximately cylindrical sleeve (2) parallel to the central axis (21) of the sleeve and are provided with openings for cold, hot and mixed water, of which one disc (3) is immovable and the other disc (4) is constructed to be displaceable relative to the first disc (3) by means of a handle, characterised in that a sealing member (5) is radially and movably arranged in one longitudinal half of the generated surface of the sleeve (2), that openings in the sealing member (5) form inlet and outlet openings (31, 32) of the sleeve (2) for the connection of cold, hot and mixed water, that the two discs (3, 4) are provided with water impact surfaces that are staggered in the direction of throughflow, so that the pressure of the water flowing in and flowing out presses the two discs (3, 4) radially into the sleeve (2) and onto one another.

2. Mixing valve according to claim 1, characterised in that the sealing member (5) is radially guided in the sleeve (2) and directly connects, in a sealing manner, the inlet and outlet channels (11, 12) of the valve housing (1) with the openings in the immovable disc (3) so that the sleeve (2) does not come into contact with the water flowing in and flowing out.

## Revendications

1°) Mélangeur en particulier pour appareils sanitaires, comportant une poignée, et deux disques (3, 4), superposés, dans une douille (2) réalisée sensiblement cylindriquement, parallèlement à l'axe central de la douille (2), pourvue d'ouvertures pour le passage de l'eau, froide, chaude, ou mélangée, destinés à régler les proportions du mélange et le débit, l'un de ces disques (3) étant immobile, l'autre disque (4) etant realise de façon a pouvoir être déplacé par rapport au premier disque (3), à l'aide d'une poignée, mélangeur caractérisé en ce qu'il est disposé une pièce d'étanchéité (5) radiale et mobile dans une moitié de la longueur de la surface d'enveloppement de la douille (2), que des orifices pratiqués dans la pièce d'étanchéité forment les ouvertures d'entrée et de sortie (31, 32) pour les raccordements de l'eau, froide, chaude, et mélangée, que ces deux disques (3, 4) sont pourvus de surfaces où l'eau vient buter, echelonnées dans la direction de l'écoulement, de sorte que la pression de l'eau, arrivant et sortant, pousse les deux disques (3, 4), radialement dans la douille (2), et l'un contre l'autre.

2°) Mélangeur suivant la revendication 1, caractérisé en ce que la pièce d'étanchéité (5) est guidée radialement dans la douille (2) et relie directement les canaux d'arrivée et de départ (11, 12) de la cage (1) de la soupape avec les ouvertures pratiquées dans le disque fixe, d'une façon étanche, de sorte que la douille (2) n'entre pas en contact avec l'eau arrivant et partant.

Fig. 2

Fig. 1